# EUROPÄISCHE PATENTANMELDUNG

(11) **EP 4 296 813 A2**
(43) Veröffentlichungstag der Anmeldung: **27.12.2023**
(21) Anmeldenummer: 23171668.9
(22) Anmeldetag: 04.05.2023
(51) Int. Cl.: G05B 23/02

(54) **ÜBERWACHUNGSVERFAHREN UND /-VORRICHTUNG FÜR EINE INDUSTRIEANLAGE**

(30) Priorität: 30.05.2022 DE 102022113608
(71) Anmelder: E.ON Digital Technology GmbH, 30457 Hannover (DE); E.ON Energy Projects GmbH, 80992 München (DE)
(72) Erfinder: Schrimpf, Thomas, 80636 München (DE); Kahlert, Dr. Steffen, 80992 München (DE); Cangelosi, Quentin, 81479 München (DE); Cortiana, Giorgio, 80992 München (DE); O'Meara, Dr. Corey, 80992 München (DE); Migunova, Anastasia, 53919 Weilerswist (DE)
(74) Vertreter: Bals & Vogel Patentanwälte PartGmbB

(57) **Zusammenfassung**

Die Erfindung betrifft ein Kontroll- und Überwachungsverfahren für eine Industrieanlage (100), umfassend insbesondere mindestens eine Anlage zur Energieerzeugung, Energieumwandlung und/oder Energieübertragung, eine Medienversorgungsanlage, eine Produktionsanlage, eine Verarbeitungsanlage und/oder eine Betriebsanlage, um vorzugsweise eine Instandhaltung der Industrieanlage (100) vorausschauend durchführen zu können, und um bevorzugt Störungen und/oder Ausfälle im Betrieb der Industrieanlage (100) zu vermeiden,
aufweisend:
- Bereitstellen von Sensorwerten (SW) von einer Vielzahl an Sensoren (Si), die insbesondere der Industrieanlage (100) als Ganzes, mindestens einer Komponente (K) der Industrieanlage (100) und/oder mindestens einer Subkomponente (SK) der Industrieanlage (100) zugehören,
- Gruppieren von Sensorwerten (SW) in Abhängigkeit von mindestens einem Faktor im Betrieb der Industrieanlage (100),
- Verarbeiten von Sensorwerten (SW) in Abhängigkeit von dem Gruppieren,
- Bereitstellen von mindestens einem, insbesondere normierten, Gesundheitsindexwert (HI) für die Industrieanlage (100) in Abhängigkeit von dem Verarbeiten.

## Beschreibung

Die Erfindung betrifft ein Kontroll- und Überwachungsverfahren für eine Industrieanlage, umfassend insbesondere mindestens eine Anlage zur Energieerzeugung, Energieumwandlung und/oder Energieübertragung, eine Medienversorgungsanlage (z. B. für Wasser, Druckluft, Kälte, technische Gase usw.), eine Produktionsanlage, eine Verarbeitungsanlage und/oder eine Betriebsanlage, um vorzugsweise eine Instandhaltung (umfassend bspw. Wartung) der Industrieanlage vorausschauend durchführen zu können, und um bevorzugt Störungen und/oder Ausfälle im Betrieb der Industrieanlage zu vermeiden, und/oder um (sich anbahnende) Schädigungen und/oder Trends möglichst früh zu erkennen. Ferner betrifft die Erfindung ein korrespondierendes Computerprogrammprodukt zum Durchführen eines entsprechenden Verfahrens. Weiterhin betrifft die Erfindung ein korrespondierendes Steuersystem zum Durchführen eines entsprechenden Verfahrens.

Industrieanlagen umfassen zumeist eine große Anzahl von Sensoren (oft über 100 oder sogar 1000 Sensoren), Komponenten und/oder Subkomponenten, die für den Betrieb der Anlagen funktionswesentlich sind. Um einen störungsfreien Betrieb von solchen Industrieanlagen gewährleisten zu können, müssen die einzelnen Sensoren, Komponenten und/oder Subkomponenten der Anlagen überwacht werden. Oft ist dies nur mit einem relativ großen Aufwand möglich.

Die Aufgabe der Erfindung ist, ein Kontroll- und Überwachungsverfahren für eine Industrieanlage bereitzustellen, die bspw. mindestens eine Anlage zur Energieerzeugung, Energieumwandlung und/oder Energieübertragung, eine Medienversorgungsanlage, eine Produktionsanlage, eine Verarbeitungsanlage und/oder eine Betriebsanlage umfassen kann, um vorzugsweise eine Instandhaltung (umfassend bspw. Wartung) der Industrieanlage vorausschauend durchführen zu können, und um bevorzugt Störungen und/oder Ausfälle im Betrieb der Industrieanlage zu vermeiden, und/oder um (sich anbahnende) Schädigungen und/oder Trends möglichst früh zu erkennen. Insbesondere ist es Aufgabe der Erfindung eine schnelles, intuitives, verständliches und überschaubares Kontroll- und Überwachungsverfahren für eine Industrieanlage mit einem reduzierten Kontroll- und Überwachungsaufwand bereitzustellen. Bevorzugt ist es Aufgabe der Erfindung ein lernfähiges Kontroll- und Überwachungsverfahren für eine Industrieanlage bereitzustellen, welches iterativ und adaptiv anpassbar ist, um eine verbesserte Instandhaltung, insbesondere verbesserte Wartung, der Industrieanlage zu ermöglichen. Ferner ist es Aufgabe der Erfindung, ein korrespondierendes Computerprogrammprodukt zum Durchführen eines entsprechenden Verfahrens zur Verfügung zu stellen. Weiterhin ist es Aufgabe der Erfindung, ein korrespondierendes Steuersystem zum Durchführen eines entsprechenden Verfahrens zur Verfügung zu stellen.

Die Aufgabe wird gelöst durch: ein Kontroll- und Überwachungsverfahren für eine Industrieanlage gemäß dem unabhängigen Verfahrensanspruch, ein Computerprogrammprodukt gemäß dem unabhängigen Produktanspruch und ein Steuersystem gemäß dem unabhängigen Systemanspruch. Weitere Merkmale, Vorteile und Details der Erfindung ergeben sich aus den jeweiligen Unteransprüchen, der Beschreibung und den Zeichnungen. Dabei gelten Merkmale, Vorteile und Details, die im Zusammenhang mit unterschiedlichen Erfindungsaspekten beschrieben sind, selbstverständlich auch im Zusammenhang mit den anderen Erfindungsaspekten und jeweils umgekehrt, sodass bezüglich der Offenbarung zu den einzelnen Erfindungsaspekten stets wechselseitig Bezug genommen wird bzw. werden kann.

Die Erfindung stellt bereit: ein Kontroll- und Überwachungsverfahren für eine Industrieanlage, umfassend insbesondere mindestens eine Anlage zur Energieerzeugung, Energieumwandlung und/oder Energieübertragung, eine Medienversorgungsanlage, eine Produktionsanlage, eine Verarbeitungsanlage und/oder eine Betriebsanlage, um vorzugsweise eine Instandhaltung, umfassend bspw. eine Wartung, der Industrieanlage vorausschauend durchführen zu können, und um bevorzugt Störungen und/oder Ausfälle im Betrieb der Industrieanlage zu vermeiden, und/oder um (sich anbahnende) Schädigungen und/oder Trends möglichst früh zu erkennen. Das Kontroll- und Überwachungsverfahren weist dabei folgende Verfahrensschritte/Aktionen auf:
- Bereitstellen (d. h. Erfassen, Erhalten und/oder Vorhersagen) von Sensorwerten von einer Vielzahl (bspw. über 1000) an Sensoren, die insbesondere der Industrieanlage als Ganzes, mindestens einer Komponente der Industrieanlage und/oder mindestens einer Subkomponente der Industrieanlage zugehören,
- Gruppieren, insbesondere automatisches und/oder automatisiertes, Gruppieren, von Sensorwerten in Abhängigkeit von mindestens einem Faktor (wie z. B. funktionale Zugehörigkeit von Sensoren (Si), Subkomponentenzugehörigkeit, Komponentenzugehörigkeit, örtliche Zugehörigkeit, zeitliche Abhängigkeit, prozesstechnische, physikalische und/oder chemische Zugehörigkeit, Betriebsmodizugehörigkeit, Datenkorrelation usw.),
- Verarbeiten (d. h. Analysieren und/oder Auswerten und ggf. Aggregieren von Abweichungen von Normalverhalten) von Sensorwerten in Abhängigkeit von dem Gruppieren,
- Bereitstellen von mindestens einem, insbesondere normierten, Gesundheitsindexwert für die Industrieanlage in Abhängigkeit von dem Verarbeiten.

Unter einer Instandhaltung im Sinne der Erfindung kann eine Kombination von sämtlichen technischen und/oder administrativen Maßnahmen, sowie Maßnahmen des Managements, verstanden werden, die insbesondere während des Lebenszyklus einer Industrieanlage anfallen und die dem Erhalt oder der Wiederherstellung des funktionsfähigen Zustands der Industrieanlage dienen können, sodass die Anlage die geforderte Funktion erfüllen kann. Unter der Instandhaltung kann bspw. eine Wartung verstanden werden, die sämtliche Maßnahmen zur Verzögerung des Abbaus und/oder der Abnutzung und sämtliche Maßnahmen zur Erhaltung der Industrieanlage umfassen kann. Vorteilhafterweise kann die Instandhaltung im Sinne der Erfindung eine Inspektion, eine Instandsetzung und/oder Verbesserung des funktionsfähigen Zustands der Industrieanlage umfassen.

Eine Komponente kann bspw. eine Teilanlage, ein Teilsystem, eine Betriebseinheit o. Ä. der Industrieanlage sein.

Eine Subkomponente kann bspw. eine Teilanlage, ein Teilsystem, eine Betriebseinheit, ein Element o. Ä. einer Komponente der Industrieanlage sein.

Eine Komponente der Industrieanlage stellt beispielsweise ein technischer Teilbereich der Industrieanlage dar, wie z. B. bei einem Gaskraftwerk zur Stromerzeugung (als Industrieanlage), ein Heizblock bzw. Abhitzekessel der Anlage, die Gasturbine oder der Stromgenerator oder nur ein Stellmotor oder eine fluidführende Leitung mit Druck- und/oder Temperatursensor oder dergleichen. Eine Subkomponente der Industrieanlage ist vergleichbar dazu beispielsweise ein Lager der Turbine, ein Gasbrenner oder eine elektrische Schaltung und/oder ein Generatorläufer des Stromgenerators. Dabei wird unter dem Begriff "Sensor" jedes Messelement und/oder Datengeber verstanden, welches Messgrößen und/oder Daten (z. B. Diagnosedaten aus einem Elektromotor, eine Stellungsrückmeldung eines Ventils, usw.) in Form von Parametern über ein Netzwerk (in irgendeiner Form) an eine übergeordnete Steuereinheit übertragen kann. Bei dem "Netzwerk", kann es sich um ein drahtgebundenes oder ein drahtloses Netzwerk oder eine Mischung davon handeln. Auch kann das Netzwerk unterschiedliche Teilabschnitte (gemeint sind Unternetzwerke) aufweisen, die technisch unterschiedlich ausgestaltet sein können. Beispielsweise kann ein Sensor über eine geeignete Schnittstelle, wie z. B. eine Kabel-, Bus-, Lichtwellenleiter, Internet, Funk-, Bluetooth- oder WLAN-Schnittstelle seine Parameter an eine Untersteuereinheit weiterleiten, die dann weiter z. B. über ein VPN-Tunnel im Internet die Parameter (in Form von Daten) an die Steuereinheit per Draht übertragen werden.

Der mindestens eine, insbesondere normierte, Gesundheitsindexwert ist die erfindungsgemäße Kennzahl, die angibt, wie "gesund" bzw. funktionsfähig und/oder effizient und/oder einsatzbereit die Industrieanlage ist. Unter dem mindestens einen Gesundheitsindexwert werden alle Sensorwerte verarbeitet und aggregiert. Dabei können Sensorwerte von der Ebene der einzelnen Sensoren über die Ebene der Subkomponenten und Komponenten der Industrieanlage bis hin zur Ebene der Industrieanlage als Ganzes verarbeitet und aggregiert werden. Dabei werden alle Sensorwerte derart verarbeitet, dass alle erkannten Abweichungen von erwarteten Sensorwerten (bspw. basierend auf historischen Sensorwerten aus der Vergangenheit) subsummiert (vorzugsweise mithilfe eines Verfahrens zum maschinellen Lernen) werden. Das Ergebnis wird skaliert und zwischen einem Null- und einem Eins-Wert als der mindestens eine Gesundheitsindexwert dargestellt. Der mindestens eine Gesundheitsindexwert kann einem Benutzer ausgegeben werden. Anhand des mindestens einen Gesundheitsindexwerts kann der Benutzer sofort erkennen kann, ob die Industrieanlage als Ganzes funktioniert und/oder wie gut die Anlage zwischen einem Null- und einem Eins-Wert funktioniert.

Somit kann ein verbessertes Kontroll- und Überwachungsverfahren für eine Industrieanlage bereitgestellt werden, um eine Instandhaltung, insbesondere Wartung, der Industrieanlage vorausschauend durchführen zu können, und um Störungen und/oder Ausfälle im Betrieb der Industrieanlage sicher zu vermeiden. Das Verfahren ermöglicht eine schnelle, intuitive, verständliche und überschaubare Kontroll- und Überwachungsmöglichkeit für eine Industrieanlage als Ganzes. Das Verfahren ermöglicht ferner ein hierarchisches Auswerten von Sensorwerten Ebene für Ebene, angefangen von der Industrieanlage als Ganzes, über mindestens eine Komponente der Industrieanlage und/oder über mindestens einer Subkomponente der Industrieanlage zu der Vielzahl an Sensoren. Das Verfahren ermöglicht weiterhin eine Feedback-Funktion, um ein lernfähiges Kontroll- und Überwachungsverfahren für eine Industrieanlage bereitzustellen, welches iterativ und adaptiv anpassbar ist. Das Verfahren ermöglicht des Weiteren eine Fehleranalyse im Betrieb der Industrieanlage, eine vereinfachte Darstellung in Form einer Auswahl an möglichen Sensorwerten, korrespondierenden Subkomponenten, Komponenten und/oder der Industrieanlage als Ganzes als mögliche Fehlerquellen. Vorteilhafterweise kann das Verfahren Empfehlungen für die vorausschauende Instandhaltung, insbesondere vorausschauende Wartung, bereitstellen. Auch Warnungen sind möglich sowie automatisches Veranlassen einer vorausschauenden Instandhaltung, insbesondere einer vorausschauenden Wartung.

Zusammengefasst sind die Kernvorteile des erfindungsgemäßen Verfahrens, frühzeitige Erkennung von sich abzeichnenden Schäden, Vermeidung von weiteren Folgeschäden, frühzeitige Organisation von Personal und Ersatzteilen, Umwandlung von ungeplanten Stillständen in geplante Wartungseinsätze, Erhöhung der Effizienz von Stillständen, Erkennen von ineffizienten Betriebszuständen, Erkennung von Fehlbedienungen und/oder Fehlmontagen, Ermöglichung einer gezielten Ursachenanalyse, Reduzierung des Überwachungsaufwandes, Überwachung von tausenden von Sensoren schnell, effektiv und mit einem minimalen Aufwand, usw.

Ferner kann das Verfahren mindestens einen weiteren Schritt umfassen:
- hierarchisches Auswerten von Sensorwerten in Abhängigkeit von dem mindestens einen Gesundheitsindexwert der Industrieanlage,
wobei insbesondere das hierarchische Auswerten von Sensorwerten angefangen von der Industrieanlage als Ganzes, über mindestens eine Komponente der Industrieanlage und/oder über mindestens einer Subkomponente der Industrieanlage zu der Vielzahl an Sensoren durchgeführt wird.

Auf diese Weise kann eine Fehleranalyse in Bezug auf die Veränderung des Zustands der Industrieanlage ermöglicht werden. Die Fehleranalyse kann dadurch sehr hierarchisch zu den möglichen Fehlerquellen führen: auf Komponentenebene (Anzeigen an Komponenten als mögliche Fehlerquellen), auf Subkomponentenebene (Anzeigen an Subkomponenten als mögliche Fehlerquellen) und schließlich auf Sensorebene (Anzeigen an möglichen Sensoren und den Sensorwerten als mögliche Fehlerquellen). Vorzugsweise kann eine Überprüfungs- und/oder Bestätigungsmöglichkeit für Sensorwerte als mögliche Fehlerquellen an einen berechtigten Benutzer bereitgestellt werden. Auf diese Möglichkeit wird im Nachfolgenden noch im Detail eingegangen.

Weiterhin kann das Verfahren mindestens einen weiteren Schritt umfassen:
- Fehleranalyse im Betrieb der Industrieanlage in Abhängigkeit von dem hierarchischen Auswerten,
- Ausgeben einer Rückmeldung in Abhängigkeit von der Fehleranalyse, vorzugsweise in Form einer Auswahl an möglichen Sensorwerten, korrespondierenden Subkomponenten, Komponenten und/oder der Industrieanlage als Ganzes, die mithilfe des Verfahrens als Fehlehrquellen im Betrieb der Industrieanlage bewertet wurden,
- Ausgeben einer, visuellen und/oder akustischen, Empfehlung für eine vorausschauende Wartung der Industrieanlage in Abhängigkeit von der Fehleranalyse,
- Ausgeben einer Warnung und/oder eines Alarms in Abhängigkeit von der Fehleranalyse, wenn der Betrieb der Industrieanlage fehlerhaft und/oder kritisch bewertet wurde,
- Veranlassen einer vorausschauenden Instandhaltung, insbesondere vorausschauenden Wartung, der Industrieanlage in Abhängigkeit von der Fehleranalyse.

Auf diese Weise kann eine verbesserte Instandhaltung, insbesondere Wartung, der Industrieanlage ermöglicht werden. Auch kann dadurch eine Feedbackmöglichkeit zum Anpassen von erwarteten Sensorwerten und/oder von historischen Sensorwerten für einen Normalbetrieb der Industrieanlage ermöglicht werden.

Außerdem kann eine Feedbackmöglichkeit auf verschiedenen Aggregationsebenen bereitgestellt werden, bspw. eine der Ebene der Anlage als Ganzes, auf Komponenten- und/oder Subkomponentenebene sowie auf einer Sensorebene.

Des Weiteren kann vorgesehen sein, dass beim Bereitstellen von Sensorwerten die Sensorwerte mit erwarteten Sensorwerten verglichen werden. Die erwarteten Sensorwerte können bspw. durch ein, bspw. erstes, Verfahren zum maschinellen Lernen bestimmt werden, welches insbesondere mithilfe von historischen (sog. "normalen") Sensorwerten trainiert wurde, die dem Normalbetrieb der Industrieanlage zugeordnet wurden. Mithilfe von erwarteten Sensorwerten können Abweichungen vom Normalverhalten ermittelt werden. Die Abweichungen vom Normalverhalten können wiederum zu dem mindestens einem Gesundheitsindexwert für die Industrieanlage aggregiert werden.

Vorteilhafterweise können die erwarteten Sensorwerte in Abhängigkeit von dem Gruppieren, bspw. in Abhängigkeit von anderen Sensorwerten für eine korrespondierende Gruppe, z. B. für eine korrespondierende Subkomponente der Industrieanlage, bestimmt werden. Auf diese Weise kann beim Bestimmen von erwarteten Sensorwerten funktionale Zugehörigkeit von Sensoren, deren Subkomponentenzugehörigkeit, Komponentenzugehörigkeit, örtliche Zugehörigkeit, zeitliche Abhängigkeit, prozesstechnische, physikalische und/oder chemische Zugehörigkeit, Betriebsmodizugehörigkeit, Datenkorrelation usw. berücksichtigt werden.

Zudem ist es denkbar, dass (beim Verarbeiten von Sensorwerten) solche Sensorwerte als mögliche Fehlerquellen beurteilt werden, die von den erwarteten Sensorwerten um mehr als eine bestimmte Anzahl an, bspw. um mehr als fünf, Standardabweichungen entfernt sind. Somit können Abweichungen vom Normalverhalten einfach, schnell und/oder automatisiert ermittelt werden. Somit kann auch eine automatisierte Verarbeitung von Sensorwerten ermöglicht werden, bspw. mithilfe eines, bspw. zweiten, Verfahrens zum maschinellen Lernen und/oder einer künstlichen Intelligenz.

Vorteilhafterweise kann beim Gruppieren von Sensorwerten mindestens ein Faktor berücksichtigt werden:
- funktionale Zugehörigkeit von Sensoren,
- Subkomponentenzugehörigkeit,
- Komponentenzugehörigkeit,
- örtliche Zugehörigkeit,
- zeitliche Abhängigkeit,
- physikalische und/oder chemische Zugehörigkeit,
- prozesstechnische Zugehörigkeit,
- Betriebsmodizugehörigkeit,
- Datenkorrelation usw.

Dabei ist es denkbar, dass das Gruppieren von Sensorwerten automatisiert erfolgt, vorzugsweise durch ein, bspw. zweites, Verfahren zum maschinellen Lernen. Ein, bspw. zweites, Verfahren zum maschinellen Lernen kann bspw. Datenkorrelationen erkennen und die Sensorwerte entsprechend gruppieren.

Auf diese Weise kann eine verbesserte Verarbeitung einer großen Anzahl an Sensorwerten ermöglicht werden, die völlig automatisiert, schnell und ohne großen Aufwand durchgeführt werden kann, vorzugsweise ohne jeden einzelnen Sensor gesondert zu überwachen. Die Gruppen an historischen Sensorwerten können bestimmte Cluster an Sensorwerten ergeben. Alle neuen Sensorwerte werden zugleich verarbeitet und wenn ein Sensorwert zu keinem bekannten Cluster passt, dann liegen wahrscheinlich ein Fehler und/oder ein kritischer Sensorwert vor. Eine Abweichung vom Normalverhalten kann dann berechnet werden. Auch ein hierarchisches Auswerten von Sensorwerten und/oder Fehleranalyse im Betrieb der Industrieanlage können sodann gestartet werden.

Außerdem kann beim Verarbeiten von Sensorwerten eine Kritikalität von Sensorwerten im Hinblick auf die Effizienz, Leistung und/oder Sicherheit und/oder Verfügbarkeit der Industrieanlage berücksichtigt werden. Auf diese Weise können verbesserte Ergebnisse bei dem Bereitstellen von mindestens einem, insbesondere normierten, Gesundheitsindexwert für die Industrieanlage erzielt werden. Auch ein Gestalten von individuellen und/oder unterschiedlichen Gesundheitsindexwerten, bspw. im Hinblick auf die Effizienz, Leistung und/oder Sicherheit und/oder Verfügbarkeit der Industrieanlage, wird dadurch möglich.

Zum einen kann der mindestens eine Gesundheitsindexwert einen Gesundheitsindexwert für alle Sensoren der Industrieanlage umfassen. Auf diese Weise kann eine schnelle Übersicht über die Industrieanlage als Ganzes geschaffen werden, ob die Industrieanlage "gesund" bzw. funktionsfähig und/oder effizient und/oder einsatzbereit ist.

Ferner kann der mindestens eine Gesundheitsindexwert einen Effizienzindexwert für eine bestimmte Auswahl an Sensoren der Industrieanlage umfassen. Auf diese Weise kann die Effizienz (umfassend bspw. Leistung und/oder Wirkungsgrad) der Industrieanlage beurteilt werden. Der Effizienzindexwert ist ein Maß, das auf einer voreingestellten Auswahl von Sensoren basiert. Die Auswahl kann automatisch getroffen werden. Auch kann die Auswahl von einem Benutzer gemacht werden. Der Effizienzindexwert kann analog zu dem mindestens einen Gesundheitsindexwert ermittelt werden, indem die Auswahl von Sensorwerten verarbeitet, Abweichungen von dem Normalverhalten ermittelt werden und zu einer Kennzahl aggregiert werden, die vorzugsweise skaliert werden kann.

Weiterhin kann das Verfahren mindestens einen weiteren Schritt umfassen:
- Zuordnen von mindestens einem Kritikalitätsindex zu dem mindestens einen Gesundheitsindexwert für die Industrieanlage.

Auf diese Weise kann der mindestens eine Gesundheitsindexwert beurteilt werden. Erst wenn ein auffälliger Gesundheitsindexwert mit einem hohen Kritikalitätsindex einhergeht kann von einem möglichen Fehler in der Industrieanlage ausgegangen werden. Kritikalitätsindizes können weiterhin auf eine vorteilhafte Weise für weitere Analysen und/oder Wartungsarbeiten benutzt werden.

Dabei ist es denkbar, dass der mindestens eine Kritikalitätsindex mindestens einen Leistungsindex umfasst, der eine Kritikalität des mindestens einen Gesundheitsindexwerts für die Leistung der Industrieanlage bestimmt, und/oder dass der mindestens eine Kritikalitätsindex mindestens einen Sicherheitsindex umfasst, der eine Kritikalität des mindestens einen Gesundheitsindexwerts für die Sicherheit des Betriebs der Industrieanlage bestimmt. Somit können zwei Arten von Kritikalitätsindizes bereitgestellt werden: leistungskritisch und/oder sicherheitskritisch. Die Kritikalitätsindizes können für die Interpretation des mindestens einen Gesundheitsindexwerts von Bedeutung sein. Die Idee bei der Interpretation des mindestens einen Gesundheitsindexwerts kann darin liegen, dass es vorkommen kann, dass sich die Anlage nicht wie üblich verhält (bspw. angezeigt durch einen Rückgang des Gesundheitsindexwerts), aber aus technischer Sicht ist die Änderung des Zustands nicht so relevant. An dieser Stelle können die Kritikalitätsindizes zum Einsatz kommen. Die einzelnen Sensorwerte können entsprechend in die Kategorien "Leistung", "Effizienz", "Verfügbarkeit" und/oder "Sicherheit" usw. gruppiert werden. Wenn der Gesundheitsindexwert sinkt, können nun die Kritikalitätsindizes herangezogen werden, um den Gesundheitsindexwert zu interpretieren. Mithilfe von Kritikalitätsindizes kann beurteilt werden, wie kritisch der Rückgang des Gesundheitsindexwerts ist. Wenn in diesem Fall ein Anstieg in einem der Kritikalitätsindizes beobachtet wird, dann ist das Verhalten wahrscheinlich kritisch/fehlerhaft. Die Kritikalitätsindizes weisen eine entgegengesetzte Richtung im Vergleich zu dem Gesundheitsindexwert auf.

Vorteilhafterweise kann das Verfahren mindestens einen weiteren Schritt umfassen:
- Bereitstellen von mindestens einem, insbesondere normierten, Gesundheitsindexwert für mindestens eine Komponente der Industrieanlage, insbesondere in Abhängigkeit von dem mindestens einen Gesundheitsindexwert der Industrieanlage.

Auf diese Weise kann jeweils eine Kennzahl für die Komponenten der Industrieanlage generiert und/oder ausgegeben werden, die angibt, wie "gesund" bzw. funktionsfähig und/oder effizient und/oder einsatzbereit die jeweilige Komponente ist. Auf diese Weise kann eine schnelle, intuitive, verständliche und überschaubare Kontroll- und Überwachungsmöglichkeit für die Komponenten der Industrieanlage ermöglicht werden. Auch ein hierarchisches Auswerten von Sensorwerten und/oder eine Fehleranalyse im Betrieb der Industrieanlage können dadurch vereinfacht werden.

Des Weiteren kann das Verfahren mindestens einen weiteren Schritt umfassen:
- Bereitstellen von mindestens einem, insbesondere normierten, Gesundheitsindexwert für mindestens eine Subkomponente von mindestens einer Komponente der Industrieanlage,
   insbesondere in Abhängigkeit von dem mindestens einen Gesundheitsindexwert der Industrieanlage
   und vorzugsweise in Abhängigkeit von mindestens einem Gesundheitsindexwert für mindestens eine Komponente der Industrieanlage.

Auf diese Weise kann jeweils eine Kennzahl für die Subkomponenten einzelner Komponenten der Industrieanlage generiert und/oder ausgegeben werden, die angibt, wie "gesund" bzw. funktionsfähig und/oder effizient und/oder einsatzbereit die jeweilige Subkomponente ist. Auf diese Weise kann eine schnelle, intuitive, verständliche und überschaubare Kontroll- und Überwachungsmöglichkeit für die Subkomponenten einzelner Komponenten der Industrieanlage ermöglicht werden. Auch ein hierarchisches Auswerten von Sensorwerten und/oder eine Fehleranalyse im Betrieb der Industrieanlage können dadurch vereinfacht werden.

Nach einem weiteren Vorteil kann das Verfahren mindestens einen weiteren Schritt umfassen:
- Bereitstellen von einer zugehörigen Sensorauswahl in Abhängigkeit von dem Gruppieren, bspw. für mindestens eine Subkomponente von mindestens einer Komponente der Industrieanlage,
   insbesondere in Abhängigkeit von dem mindestens einen Gesundheitsindexwert der Industrieanlage
   und vorzugsweise insbesondere in Abhängigkeit von mindestens einem Gesundheitsindexwert für mindestens eine Komponente der Industrieanlage
   und bevorzugt in Abhängigkeit von mindestens einem Gesundheitsindexwert für mindestens eine Subkomponente einer Komponente der Industrieanlage.

Auf diese Weise können die Sensoren mit den dazugehörigen Sensorwerten dargestellt werden. Die Darstellung kann entsprechend der Gruppierung erfolgen, bspw. für eine korrespondierende Subkomponente. Ein intuitives Interagieren mit einem berechtigten Benutzer kann dadurch ermöglicht werden und ein Vertrauen in das Verfahren kann dadurch gestärkt werden. Auch können dadurch ein hierarchisches Auswerten von Sensorwerten und/oder eine Fehleranalyse im Betrieb der Industrieanlage verbessert werden.

Zudem kann vorgesehen sein, dass beim Bereitstellen von Sensorwerten mindestens eine Überwachungsperiode, von bspw. 1 min, vorzugsweise für eine periodische Durchführung des Verfahrens, bestimmt wird. Außerdem, stattdessen oder zusätzlich dazu kann vorgesehen sein, dass beim Bereitstellen von Sensorwerten eine individuelle Überwachungsperiode für mindestens einen Sensor bestimmt wird. Auf diese Weise kann eine wiederholende Durchführung des Verfahrens ermöglicht werden.

Vorteilhafterweise kann das Verfahren periodisch, regelmäßig und/oder ereignisgesteuert durchgeführt werden. Auf diese Weise kann eine effiziente und sichere Kontroll- und/oder Überwachungsmöglichkeit für die Industrieanlage ermöglicht werden.

Ferner kann das Verfahren mindestens einen weiteren Schritt umfassen:
- Zuordnen von Schwellenwerten zur Definition von Warnungen und/oder Fehlerstufen für den mindestens einen Gesundheitsindexwert der Industrieanlage und insbesondere für mindestens einen Gesundheitsindexwert für mindestens eine Komponente der Industrieanlage
   und vorzugsweise für mindestens einen Gesundheitsindexwert für mindestens eine Subkomponente einer Komponente der Industrieanlage

Die Zuordnung/Definition von individuellen Grenzwerten kann auch automatisiert über statistische Methoden oder Verfahren zum maschinellen Lernen erfolgen. Auf diese Weise kann eine flexible und/oder individuelle Kontroll- und/oder Überwachungsmöglichkeit für die Industrieanlage ermöglicht werden. Denkbar ist ferner, dass Warnungen und/oder Fehlerstufen verstärkt werden, je stärker der Rückgang des Gesundheitsindexwerts auftritt.

Weiterhin kann das Verfahren mindestens einen weiteren Schritt umfassen:
- Bereitstellen einer Auswahl an Sensorwerten, korrespondierenden Subkomponenten, Komponenten und/oder der Industrieanlage als Ganzes, die mithilfe des Verfahrens als mögliche Fehlehrquellen im Betrieb der Industrieanlage bewertet wurden, insbesondere an einen berechtigten Benutzer,
- Bereitstellen einer Bestätigungsmöglichkeit für Sensorwerte, die mithilfe des Verfahrens als mögliche Fehlehrquellen im Betrieb der Industrieanlage bewertet wurden, als zulässige Sensorwerte,
   insbesondere an einen berechtigten Benutzer,
- Bereitstellen einer Gruppierungsmöglichkeit, für Sensorwerte, die mithilfe des Verfahrens als mögliche Fehlehrquellen im Betrieb der Industrieanlage bewertet wurden, insbesondere im Hinblick auf den bestimmten Faktor im Betrieb der Industrieanlage,
   insbesondere an einen berechtigten Benutzer, und/oder
- Bereitstellen einer Bewertungsmöglichkeit für Sensorwerte, die mithilfe des Verfahrens als mögliche Fehlehrquellen im Betrieb der Industrieanlage bewertet wurden, insbesondere zum Bewerten einer Kritikalität von den Sensorwerten im Hinblick auf die Effizienz, Leistung und/oder Sicherheit und/oder Verfügbarkeit der Industrieanlage, insbesondere an einen berechtigten Benutzer.

Auf diese Weise kann eine Feedbackmöglichkeit zum Anpassen von erwarteten Sensorwerten und/oder von historischen Sensorwerten für einen Normalbetrieb der Industrieanlage ermöglicht werden. Eine Feedback-Funktion kann vorteilhafterweise dazu dienen, ein lernfähiges Kontroll- und Überwachungsverfahren für eine Industrieanlage bereitzustellen, welches iterativ und adaptiv angepasst werden kann.

Des Weiteren kann das Verfahren mindestens einen weiteren Schritt umfassen:
- Anpassen einer Strategie, insbesondere Anpassen einer berichtigten Menge an historischen Sensorwerten für einen Normalbetrieb der Industrieanlage, in Abhängigkeit von einer Rückmeldung von einem berechtigten Benutzer.

Auf diese Weise können verbesserte Trainingsdaten bereitgestellt werden, um das Verfahrens nach und nach zu verfeinern, adaptiv zu gestalten und auf eine verbesserte Weise auf die Entwicklungen in der Industrieanlage zu reagieren.

Zudem kann vorgesehen sein, dass beim Vergleichen von Sensorwerten mit erwarteten Sensorwerten mindestens ein, bspw. erstes, Verfahren zum Lernen und/oder eine künstliche Intelligenz und/oder ein künstliches neuronales Netz verwendet wird. Auf diese Weise kann das Verfahren auf eine vorteilhafte Weise automatisiert werden.

Außerdem kann vorgesehen sein, dass beim Gruppieren von Sensorwerten, beim Verarbeiten von Sensorwerten und/oder beim Bereitstellen von dem mindestens einen Gesundheitsindexwert der Industrieanlage ein, bspw. zweites, Verfahren zum maschinellen Lernen und/oder eine künstliche Intelligenz und/oder ein künstliches neuronales Netz verwendet wird. Auf diese Weise kann das Verfahren auf eine vorteilhafte Weise automatisiert werden.

Vorteilhafterweise kann beim Gruppieren von Sensorwerten, beim Verarbeiten von Sensorwerten und/oder beim Bereitstellen von dem mindestens einen Gesundheitsindexwert der Industrieanlage ein automatisches, datengesteuertes Verfahren zur Festlegung des Normalbetriebs der Industrieanlage verwendet werden. Dabei können Sensorwerte herausgefiltert werden, die nicht zu den häufigsten Sensorwert-Clustern gehören. Zudem können die Sensorwerte herausgefiltert werden, die an Zeiträumen erstellt wurden, in denen ein anormales Ereignis auftrat, wie z. B. die Zeiten, in denen die Industrieanlage gewartet wurde. Die Sensorwerte, die zum Normalbetrieb der Industrieanlage gehören, können vorteilhafterweise als historische Sensorwerte definiert und zum Anlernen von mindestens einem Verfahren zum maschinellen Lernen verwendet werden, welches bei dem vorliegenden Verfahren verwendet wird.

Ferner kann das Verfahren mindestens einen weiteren Schritt umfassen:
- Speichern von historischen Sensorwerten für einen Normalbetrieb der Industrieanlage, von berichtigten Sensorwerten für einen Normalbetrieb der Industrieanlage, von dem mindestens einen Gesundheitsindexwert der Industrieanlage und insbesondere von mindestens einem Kritikalitätsindex von dem mindestens einen Gesundheitsindexwert zumindest zum Teil auf einer externen Backendeinheit.

Auf diese Weise können historischen Sensorwerte als Trainingsdaten zum Anlernen von Verfahren zum maschinellen Lernen bereitgestellt werden, die bei dem vorliegenden Verfahren verwendet werden können.

Weiterhin stellt die Erfindung ein Computerprogrammprodukt bereit, umfassend Befehle, die bei der Ausführung des Computerprogrammprodukts durch einen Computer diesen veranlassen, das Verfahren durchzuführen, welches wie oben beschrieben ablaufen kann. Mithilfe des erfindungsgemäßen Computerprogrammprodukts können die gleichen Vorteile erreicht werden, die im Zusammenhang mit dem erfindungsgemäßen Verfahren beschrieben wurden. Auf diese Vorteile wird vorliegend vollumfänglich Bezug genommen.

Des Weiteren stellt die Erfindung ein Steuersystem mit einer Steuereinheit bereit, aufweisend eine Speichereinheit und eine Recheneinheit, wobei in der Speichereinheit ein Code hinterlegt ist, und wobei beim Ausführen des Codes durch die Recheneinheit ein Verfahren durchgeführt wird, welches wie oben beschrieben ablaufen kann. Mithilfe des erfindungsgemäßen Steuersystems können die gleichen Vorteile erreicht werden, die im Zusammenhang mit dem erfindungsgemäßen Verfahren beschrieben wurden. Auf diese Vorteile wird vorliegend vollumfänglich Bezug genommen. Die Speichereinheit und/oder die Recheneinheit können dabei zumindest zum Teil auf einer externen Backendeinheit bereitgestellt werden.

Vorteilhafterweise kann bei einem Steuersystem eine Schnittstelle für einen Benutzer, insbesondere in Form einer Ein- und/oder Ausgabeoberfläche, vorgesehen sein, die speziell dazu ausgeführt ist, um mindestens einen Schritt und/oder mindestens ein Ergebnis des Verfahrens auszugeben, und/oder um mindestens eine Interaktionsmöglichkeit für den Benutzer zum Beeinflussen des Verfahrens bereitzustellen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt:
- Fig. 1: eine beispielhafte Darstellung von Ergebnissen eines Verfahrens im Rahmen der vorliegenden Offenbarung für eine Industrieanlage als Ganzes,
- Fig. 2: eine beispielhafte Darstellung von Ergebnissen eines Verfahrens im Rahmen der vorliegenden Offenbarung für eine Komponente einer Industrieanlage,
- Fig.3: eine beispielhafte Darstellung von Ergebnissen eines Verfahrens im Rahmen der vorliegenden Offenbarung für eine Subkomponente einer Komponente einer Industrieanlage,
- Fig. 4: eine beispielhafte Darstellung eines Effizienzindexwerts,
- Fig. 5: eine beispielhafte Darstellung beispielhafter Kritikalitätsindizes, und
- Fig. 6: eine beispielhafte Darstellung eines Ablaufs eines hierarchischen Auswertens von Sensorwerten.

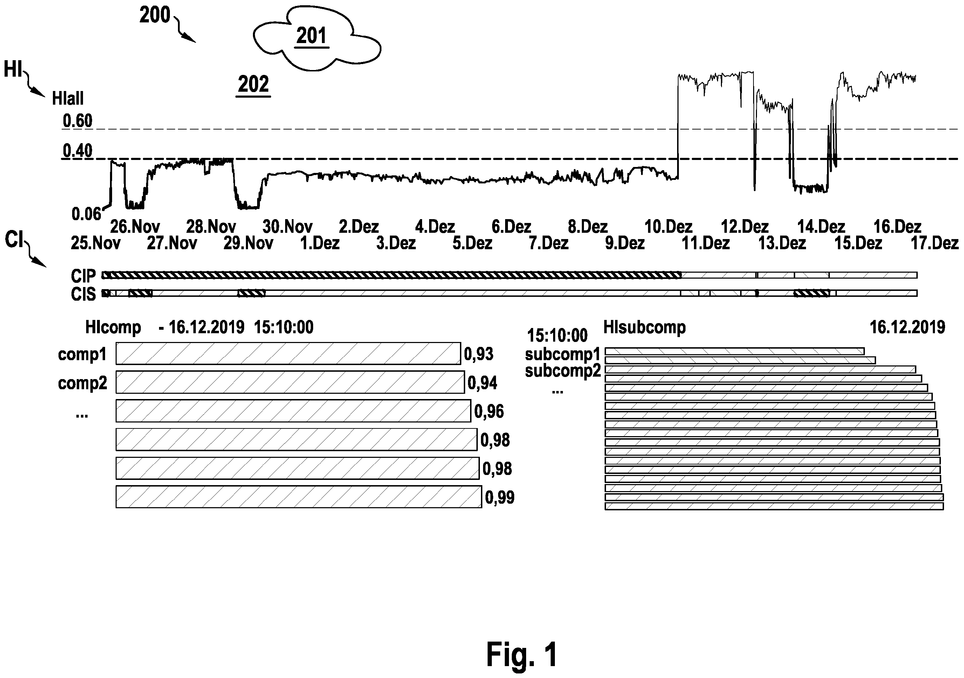

Die Figuren 1 bis 6 dienen zum Erklären eines Verfahrens im Sinne der Erfindung, welches ein Kontroll- und Überwachungsverfahren für eine Industrieanlage 100 dient, um vorzugsweise eine Instandhaltung, insbesondere Wartung, der Industrieanlage 100 vorausschauend durchführen zu können, und um bevorzugt Störungen und/oder Ausfälle im Betrieb der Industrieanlage 100 zu vermeiden, und/oder um (sich anbahnende) Schädigungen und/oder Trends möglichst früh zu erkennen.

Eine Industrieanlage 100 im Rahmen der vorliegenden Offenbarung ist im Ganzen lediglich aus Einfachheitsgründen nicht dargestellt. Eine Industrieanlage 100 im Rahmen der vorliegenden Offenbarung kann mindestens eine Anlage zur Energieerzeugung, Energieumwandlung und/oder Energieübertragung, eine Medienversorgungsanlage, eine Produktionsanlage, eine Verarbeitungsanlage und/oder eine Betriebsanlage umfassen.

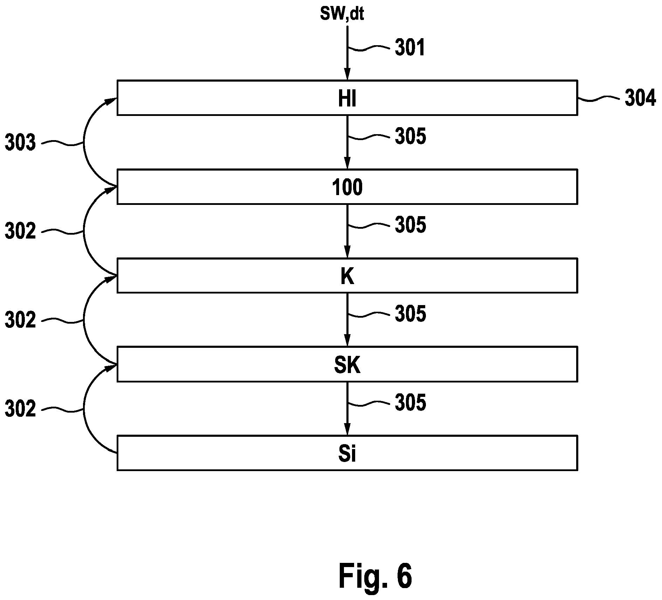

Das Kontroll- und Überwachungsverfahren weist dabei folgende Verfahrensschritte/Aktionen auf (vgl. Figur 6):
301 Bereitstellen (d. h. Erfassen, Erhalten und/oder Vorhersagen) von Sensorwerten SW von einer Vielzahl (bspw. über 1000 oder noch viel mehr) an Sensoren Si, die insbesondere der Industrieanlage 100 als Ganzes, mindestens einer Komponente K der Industrieanlage 100 und/oder mindestens einer Subkomponente SK der Industrieanlage 100 zugehören,
302 Gruppieren, insbesondere automatisches und/oder automatisiertes, Gruppieren, von Sensorwerten in Abhängigkeit von mindestens einem Faktor, wie z. B. funktionale Zugehörigkeit von Sensoren Si, Subkomponentenzugehörigkeit, Komponentenzugehörigkeit, örtliche Zugehörigkeit, zeitliche Abhängigkeit, prozesstechnische, physikalische und/oder chemische Zugehörigkeit, Betriebsmodizugehörigkeit, Datenkorrelation usw.,
303 Verarbeiten (d. h. Analysieren und/oder Auswerten und ggf. Aggregieren von Abweichungen von Normalverhalten) von Sensorwerten SW in Abhängigkeit von dem Gruppieren,
304 Bereitstellen von mindestens einem, insbesondere normierten, Gesundheitsindexwert HI für die Industrieanlage 100 in Abhängigkeit von dem Verarbeiten.

Der mindestens eine, insbesondere normierte, Gesundheitsindexwert HI ist oben in der Figur 1 beispielhaft dargestellt. Der mindestens eine, insbesondere normierte, Gesundheitsindexwert HI kann eine Kennzahl darstellen, die bspw. zwischen "Null" und "Eins" oder zwischen "Null" und "100" abgebildet werden kann, die angibt, wie "gesund" bzw. funktionsfähig und/oder effizient und/oder einsatzbereit die Industrieanlage 100 ist.

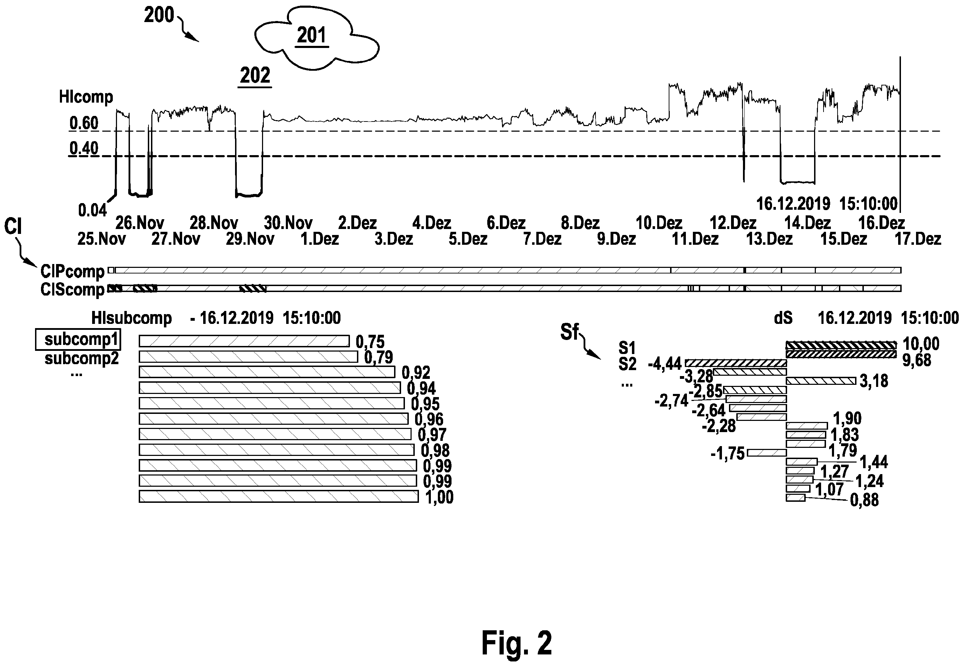

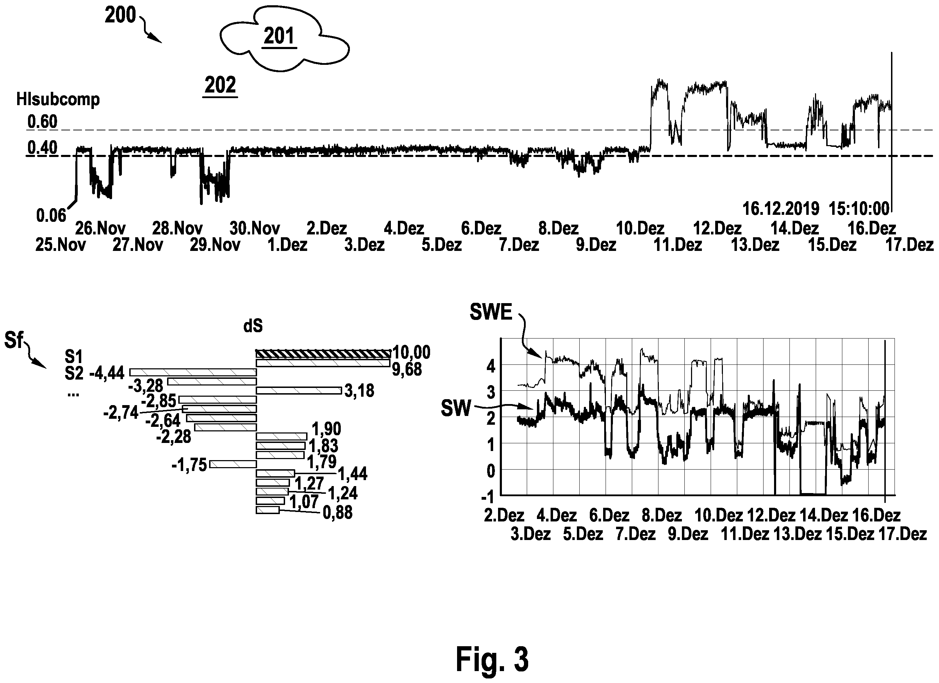

Unter dem mindestens einen Gesundheitsindexwert HI werden vorteilhafterweise alle Sensorwerte SW verarbeitet und aggregiert. Dabei werden alle Sensorwerte SW derart verarbeitet, dass alle erkannten Abweichungen dS (vgl. Figuren 2 und 3) von erwarteten Sensorwerten SWE (vgl. Figur 3) subsummiert werden. Das Ergebnis wird skaliert und zwischen einem Null- und einem Eins-Wert als der mindestens eine Gesundheitsindexwert HI (vgl. Figur 1 oben) dargestellt.

Wie es die Figur 1 andeutet, kann der mindestens eine Gesundheitsindexwert HI einem Benutzer ausgegeben werden, bspw. mithilfe einer Ein- und/oder Ausgabeoberfläche 202 eines speziellen Steuersystems 200. Anhand des mindestens einen Gesundheitsindexwerts HI kann der Benutzer auf eine verständliche und intuitive Weise erkennen, ob die Industrieanlage 100 als Ganzes funktioniert und/oder wie gut die Anlage 100 zwischen einem Null- und einem Eins-Wert funktioniert.

Mithilfe des erfindungsgemäßen Kontroll- und Überwachungsverfahrens kann eine Instandhaltung, insbesondere Wartung, der Industrieanlage 100 vorausschauend durchgeführt werden. Störungen und/oder Ausfälle im Betrieb der Industrieanlage 100 können mithilfe des erfindungsgemäßen Kontroll- und Überwachungsverfahrens sicher vermieden werden. Das Verfahren ermöglicht eine schnelle, intuitive, verständliche und überschaubare Kontroll- und Überwachungsmöglichkeit für eine Industrieanlage 100 als Ganzes, um vorzugsweise. (sich anbahnende) Schädigungen und/oder Trends möglichst früh zu erkennen.

Das Verfahren ermöglicht ferner ein hierarchisches Auswerten (vgl. Figur 6) von Sensorwerten SW Ebene für Ebene, angefangen von der Industrieanlage 100 als Ganzes, über mindestens eine Komponente K der Industrieanlage 100 und/oder über mindestens einer Subkomponente SK der Industrieanlage 100 zu der Vielzahl an Sensoren Si.

Das Verfahren ermöglicht weiterhin eine Feedback-Funktion, um ein lernfähiges Kontroll- und Überwachungsverfahren für eine Industrieanlage 100 bereitzustellen, welches iterativ und adaptiv angepasst werden kann.

Das Verfahren ermöglicht des Weiteren eine Fehleranalyse im Betrieb der Industrieanlage 100, eine vereinfachte Darstellung in Form einer Auswahl an möglichen Sensorwerten (vgl.

Figur 3), korrespondierenden Subkomponenten SK (vgl. Figur 2), Komponenten K (vgl. Figur 1) und/oder der Industrieanlage 100 als Ganzes als mögliche Fehlerquellen.

Darüber hinaus kann das Verfahren Empfehlungen für eine Instandhaltung, insbesondere Wartung, und/oder Warnungen über einen Fehler bereitstellen. Ein automatisches Veranlassen einer vorausschauenden Instandhaltung, insbesondere Wartung, kann das Verfahren ebenfalls ermöglichen.

Die Figur 6 verdeutlicht, dass das Verfahren mindestens einen weiteren Schritt umfassen:
305 hierarchisches Auswerten von Sensorwerten SW in Abhängigkeit von dem mindestens einen Gesundheitsindexwert HI der Industrieanlage 100,
wobei insbesondere das hierarchische Auswerten von Sensorwerten SW angefangen von der Industrieanlage 100 als Ganzes, über mindestens eine Komponente K der Industrieanlage 100 und/oder über mindestens einer Subkomponente SK der Industrieanlage 100 zu der Vielzahl an Sensoren Si durchgeführt wird.

Auf diese Weise kann eine verbesserte Fehleranalyse in Bezug auf die Veränderung des Zustands der Industrieanlage 100 ermöglicht werden. Wie es die Figuren 1 bis 3 verdeutlichen, kann die Fehleranalyse hierarchisch zu den möglichen Fehlerquellen führen: auf Komponentenebene (Anzeigen an Komponenten als mögliche Fehlerquellen, vgl. Figur 1), auf Subkomponentenebene (Anzeigen an Subkomponenten als mögliche Fehlerquellen, vgl. Figur 2) und schließlich auf Sensorebene (Anzeigen an möglichen Sensoren Si, Sensorwerten SW und Abweichungen dS als mögliche Fehlerquellen, vgl. Figur 3).

Vorzugsweise kann eine Überprüfungs- und/oder Bestätigungsmöglichkeit für Sensorwerte SW als mögliche Fehlerquellen an einen berechtigten Benutzer bereitgestellt werden. Dazu wird im Nachfolgenden noch Bezug genommen.

Die Figur 3 zeigt eine beispielhafte Darstellung von Ergebnissen eines Verfahrens im Rahmen der vorliegenden Offenbarung für eine Subkomponente einer Komponente einer Industrieanlage. Wie es die Figur 3 unten rechts zeigt, können die Sensorwerte SW mit erwarteten Sensorwerten SWE verglichen werden. Die erwarteten Sensorwerten SWE können durch ein, bspw. erstes, Verfahren zum maschinellen Lernen und/oder eine künstliche Intelligenz und/oder ein künstliches neuronales Netz ermittelt werden. Mithilfe von erwarteten Sensorwerten SWE können Abweichungen dS vom Normalverhalten ermittelt werden. Die Abweichungen dS vom Normalverhalten können wiederum zu dem mindestens einem Gesundheitsindexwert HI für die Industrieanlage 100 aggregiert werden.

Dabei ist es denkbar, dass die erwarteten Sensorwerte SWE in Abhängigkeit von dem Gruppieren, bspw. in Abhängigkeit von anderen Sensorwerten SW für eine korrespondierende Gruppe, wie z. B. eine korrespondierende Subkomponente SK der Industrieanlage 100, bestimmt werden können. Hierzu kann ebenfalls ein, bspw. Erstes, Verfahren zum maschinellen Lernen (insbesondere das gleiche Verfahren wie zum Ermitteln von erwarteten Sensorwerten SWE) und/oder eine künstliche Intelligenz und/oder ein künstliches neuronales Netz genutzt werden.

Zudem ist es denkbar, dass (beim Verarbeiten von Sensorwerten SW) solche Sensorwerte SW als mögliche Fehlerquellen beurteilt werden, die von den erwarteten Sensorwerten SWE um mehr als eine bestimmte Anzahl an, bspw. um mehr als fünf, Standardabweichungen entfernt sind.

Beim Gruppieren von Sensorwerten SW kann mindestens ein Faktor berücksichtigt werden:
- funktionale Zugehörigkeit von Sensoren Si,
- Subkomponentenzugehörigkeit (bspw. gezeigt in den Figuren 1 bis 3),
- Komponentenzugehörigkeit,
- örtliche Zugehörigkeit,
- zeitliche Abhängigkeit,
- physikalische und/oder chemische Zugehörigkeit,
- prozesstechnische Zugehörigkeit,
- Betriebsmodizugehörigkeit,
- Datenkorrelation usw.

Dabei ist es denkbar, dass das Gruppieren von Sensorwerten SW automatisiert erfolgt, vorzugsweise durch ein, bspw. zweites, Verfahren zum maschinellen Lernen. Das Verfahren zum maschinellen Lernen kann bspw. Datenkorrelationen erkennen und entsprechend die Sensorwerte SW gruppieren. Somit kann eine schnelle Verarbeitung an einer großen Anzahl an Sensorwerten SW ermöglicht werden, die völlig automatisiert, schnell und ohne großen Aufwand durchgeführt werden kann, vorzugsweise ohne jeden einzelnen Sensor Si gesondert zu überwachen. Die Gruppen an Sensorwerten SW können historisch betrachtet bestimmte Cluster an Sensorwerten SW ergeben. Alle neuen Sensorwerte SW werden zugleich verarbeitet und wenn ein Sensorwert zu keinem Cluster (die bspw. aus den historischen Sensorwerten abgeleitet wurden) passt, dann liegen wahrscheinlich ein Fehler und/oder ein kritischer Sensorwert vor. Eine Abweichung dS vom Normalverhalten kann dann berechnet werden. Auch ein hierarchisches Auswerten von Sensorwerten SW und/oder Fehleranalyse im Betrieb der Industrieanlage 100 können daraufhin gestartet werden, wie es in der Figur 6 beispielsweise gezeigt ist.

Wie es die Figuren 1 und 2 ferner andeuten, kann beim Verarbeiten von Sensorwerten SW eine Kritikalität von Sensorwerten SW im Hinblick auf die Effizienz, Leistung und/oder Sicherheit und/oder Verfügbarkeit der Industrieanlage 100 berücksichtigt werden. Auf diese Weise kann ein Interpretieren und/oder Bewerten des mindestens einen, insbesondere normierten, Gesundheitsindexwerts HI ermöglicht werden. Auch ein Gestalten von individuellen und/oder unterschiedliche Gesundheitsindexwerten HI, bspw. im Hinblick auf die Effizienz, Leistung und/oder Sicherheit und/oder Verfügbarkeit der Industrieanlage 100, kann dadurch ermöglicht werden.

Zum einen kann der mindestens eine Gesundheitsindexwert HI einen Gesundheitsindexwert Hlall für alle Sensoren Si der Industrieanlage 100 umfassen, wie es in der Figur 1 verdeutlicht ist. Auf diese Weise kann eine schnelle Übersicht über die Industrieanlage 100 als Ganzes geschaffen werden.

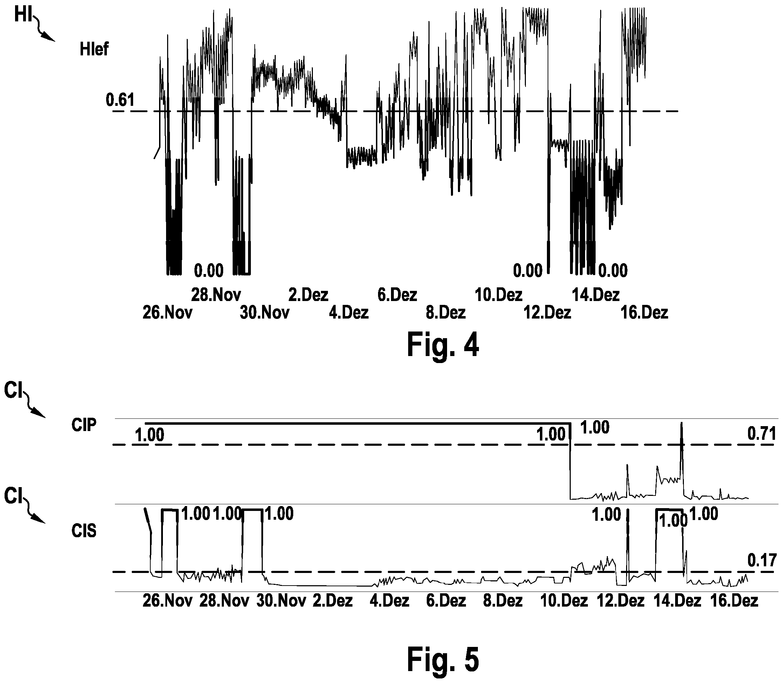

Ferner kann der mindestens eine Gesundheitsindexwert HI einen Effizienzindexwert Hlef für eine bestimmte Auswahl an Sensoren Si der Industrieanlage 100 umfassen, wie es die Figur 4 beispielhaft zeigt. Auf diese Weise kann die Effizienz (umfassend bspw. Leistung und/oder Wirkungsgrad) der Industrieanlage 100 beurteilt werden. Der Effizienzindexwert Hlef ist ein Maß, welches auf einer voreingestellten Auswahl von Sensoren Si basiert. Die Auswahl kann automatisch getroffen werden. Auch kann die Auswahl von einem Benutzer gemacht werden. Der Effizienzindexwert Hlef kann analog zu dem mindestens einen Gesundheitsindexwert HI ermittelt werden, indem die Auswahl von Sensorwerten SW verarbeitet, Abweichungen dS von dem Normalverhalten ermittelt werden und zu einer Kennzahl aggregiert werden, die vorzugsweise skaliert werden kann.

Wie es die Figuren 1 und 5 andeuten, kann das Verfahren mindestens einen weiteren Schritt umfassen:
- Zuordnen von mindestens einem Kritikalitätsindex CI zu dem mindestens einen Gesundheitsindexwert HI für die Industrieanlage 100.

Dabei ist es denkbar, dass der mindestens eine Kritikalitätsindex CI mindestens einen Leistungsindex CIP umfasst, der eine Kritikalität des mindestens einen Gesundheitsindexwerts HI für die Leistung der Industrieanlage 100 bestimmt, und/oder dass der mindestens eine Kritikalitätsindex CI mindestens einen Sicherheitsindex CIS umfasst, der eine Kritikalität des mindestens einen Gesundheitsindexwerts HI für die Sicherheit des Betriebs der Industrieanlage 100 bestimmt. Somit können zumindest zwei Arten von Kritikalitätsindizes CIP, CIS bereitgestellt werden: leistungskritisch und/oder sicherheitskritisch. Weitere Kritikalitätsindizes sind bspw. im Hinblick auf die Verfügbarkeit, Effizienz usw. denkbar. Die Kritikalitätsindizes CIP, CIS können für die Interpretation des mindestens einen Gesundheitsindexwerts HI von Vorteil sein. Wenn sich bspw. die Anlage 100 nicht wie üblich verhält (bspw. angezeigt durch einen Rückgang des Gesundheitsindexwerts HI), kann dies aus technischer Sicht unkritisch sein. An dieser Stelle können die Kritikalitätsindizes CIP, CIS herangezogen werden. Mithilfe von Kritikalitätsindizes CIP, CIS kann beurteilt werden, wie kritisch der Rückgang des Gesundheitsindexwerts HI aus technischer Sicht ist. Wenn in diesem Fall ein Anstieg in einem der Kritikalitätsindizes CIP, CIS beobachtet wird, dann ist das Verhalten wahrscheinlich kritisch/fehlerhaft. Wie es in der Figur 1 erkannt werden kann, weisen die Kritikalitätsindizes CIP, CIS eine entgegengesetzte Tendenz im Vergleich zu dem Gesundheitsindexwert HI auf.

Wie es die Figuren 1 und 2 zeigen, kann das Verfahren mindestens einen weiteren Schritt umfassen:
- Bereitstellen von mindestens einem, insbesondere normierten, Gesundheitsindexwert Hlcomp für mindestens eine Komponente K der Industrieanlage 100, insbesondere in Abhängigkeit von dem mindestens einen Gesundheitsindexwert HI der Industrieanlage 100.

Auf diese Weise kann jeweils eine Kennzahl für die Komponenten K der Industrieanlage 100 generiert und/oder ausgegeben werden, die angibt, wie "gesund" bzw. funktionsfähig und/oder effizient und/oder einsatzbereit die jeweilige Komponente K ist. Auf diese Weise kann eine schnelle, intuitive, verständliche und überschaubare Kontroll- und Überwachungsmöglichkeit für die Komponenten K der Industrieanlage 100 ermöglicht werden. Auch ein hierarchisches Auswerten von Sensorwerten SW und/oder eine Fehleranalyse im Betrieb der Industrieanlage 100 im Sinne der Figur 6 können dadurch vereinfacht werden.

Wie es die Figuren 1 bis 3 zeigen, kann das Verfahren mindestens einen weiteren Schritt umfassen:
- Bereitstellen von mindestens einem, insbesondere normierten, Gesundheitsindexwert Hlsubcomp für mindestens eine Subkomponente SK von mindestens einer Komponente K der Industrieanlage 100,
   insbesondere in Abhängigkeit von dem mindestens einen Gesundheitsindexwert HI der Industrieanlage 100
   und vorzugsweise in Abhängigkeit von mindestens einem Gesundheitsindexwert Hlcomp für mindestens eine Komponente K der Industrieanlage 100.

Auf diese Weise kann jeweils eine Kennzahl für die Subkomponenten SK einzelner Komponenten K der Industrieanlage 100 generiert und/oder ausgegeben werden, die angibt, wie "gesund" bzw. funktionsfähig und/oder effizient und/oder einsatzbereit die jeweilige Subkomponente ist. Auf diese Weise kann eine schnelle, intuitive, verständliche und überschaubare Kontroll- und Überwachungsmöglichkeit für die Subkomponenten SK einzelner Komponenten K der Industrieanlage 100 ermöglicht werden. Auch ein hierarchisches Auswerten von Sensorwerten SW und/oder eine Fehleranalyse im Betrieb der Industrieanlage 100 im Sinne der Figur 6 können dadurch vereinfacht werden.

Wie es die Figuren 2 und 3 zeigen, kann das Verfahren mindestens einen weiteren Schritt umfassen:
- Bereitstellen von einer zugehörigen Sensorauswahl Sf in Abhängigkeit von dem Gruppieren, bspw. für mindestens eine Subkomponente SK von mindestens einer Komponente K der Industrieanlage 100,

insbesondere in Abhängigkeit von dem mindestens einen Gesundheitsindexwert HI der Industrieanlage 100
und vorzugsweise insbesondere in Abhängigkeit von mindestens einem Gesundheitsindexwert Hlcomp für mindestens eine Komponente K der Industrieanlage 100 und bevorzugt in Abhängigkeit von mindestens einem Gesundheitsindexwert Hlsubcomp für mindestens eine Subkomponente SK einer Komponente K der Industrieanlage 100.

Auf diese Weise können die Sensoren Si mit den dazugehörigen Sensorwerten SW dargestellt werden. Die Darstellung kann entsprechend der Gruppierung erfolgen, die Figuren 2 und 3 zeigen bspw. eine Gruppierung von Sensoren Si für eine korrespondierende Subkomponente SK. Dadurch können ein hierarchisches Auswerten von Sensorwerten SW und/oder eine Fehleranalyse im Betrieb der Industrieanlage 100 im Sinne der Figur 6 verbessert werden.

Beim Bereitstellen von Sensorwerten SW kann mindestens eine Überwachungsperiode dt, von bspw. 1 min, vorzugsweise für eine periodische Durchführung des Verfahrens, bestimmt werden, die verarbeitet wird. Außerdem kann vorgesehen sein, dass beim Bereitstellen von Sensorwerten SW eine individuelle Überwachungsperiode für mindestens einen Sensor Si bestimmt wird.

Das Verfahren kann periodisch, regelmäßig und/oder ereignisgesteuert durchgeführt werden.

Das Verfahren kann ferner vorsehen:
- Zuordnen von Schwellenwerten zur Definition von Warnungen und/oder Fehlerstufen für den mindestens einen Gesundheitsindexwert HI der Industrieanlage 100 und insbesondere für mindestens einen Gesundheitsindexwert Hlcomp für mindestens eine Komponente K der Industrieanlage 100
und vorzugsweise für mindestens einen Gesundheitsindexwert Hlsubcomp für mindestens eine Subkomponente SK einer Komponente K der Industrieanlage 100.

Die Zuordnung/Definition von individuellen Grenzwerten kann auch automatisiert über statistische Methoden oder Verfahren zum maschinellen Lernen erfolgen. Auf diese Weise kann eine verbesserte Kontroll- und/oder Überwachungsmöglichkeit für die Industrieanlage 100 ermöglicht werden. Denkbar ist ferner, dass Warnungen und/oder Fehlerstufen verstärkt werden, je stärker der Rückgang des Gesundheitsindexwerts HI auftritt.

Das Verfahren kann weiterhin vorsehen:
- Bereitstellen einer Auswahl an Sensorwerten SW, korrespondierenden Subkomponenten SK, Komponenten K und/oder der Industrieanlage 100 als Ganzes, die mithilfe des Verfahrens als mögliche Fehlehrquellen im Betrieb der Industrieanlage 100 bewertet wurden,
   insbesondere an einen berechtigten Benutzer,
- Bereitstellen einer Bestätigungsmöglichkeit für Sensorwerte SW, die mithilfe des Verfahrens als mögliche Fehlehrquellen im Betrieb der Industrieanlage 100 bewertet wurden, als zulässige Sensorwerte,
   insbesondere an einen berechtigten Benutzer,
- Bereitstellen einer Gruppierungsmöglichkeit, für Sensorwerte SW, die mithilfe des Verfahrens als mögliche Fehlehrquellen im Betrieb der Industrieanlage 100 bewertet wurden, insbesondere im Hinblick auf den bestimmten Faktor im Betrieb der Industrieanlage 100,
   insbesondere an einen berechtigten Benutzer, und/oder
- Bereitstellen einer Bewertungsmöglichkeit für Sensorwerte SW, die mithilfe des Verfahrens als mögliche Fehlehrquellen im Betrieb der Industrieanlage 100 bewertet wurden, insbesondere zum Bewerten einer Kritikalität von den Sensorwerten im Hinblick auf die Effizienz, Leistung und/oder Sicherheit und/oder Verfügbarkeit der Industrieanlage 100,
   insbesondere an einen berechtigten Benutzer.

Auf diese Weise kann eine Feedbackmöglichkeit zum Anpassen von erwarteten Sensorwerten SW und/oder zum Anpassen von historischen Sensorwerten für einen Normalbetrieb der Industrieanlage 100 ermöglicht werden. Somit kann ein lernfähiges Kontroll- und Überwachungsverfahren ermöglicht werden.

Außerdem kann eine Feedbackmöglichkeit auf verschiedenen Aggregationsebenen bereitgestellt werden, bspw. eine der Ebene der Anlage als Ganzes, auf Komponenten- und/oder Subkomponentenebene sowie auf einer Sensorebene.

Des Weiteren kann das Verfahren vorsehen:
- Anpassen einer Strategie, insbesondere Anpassen einer berichtigten Menge an historischen Sensorwerten für einen Normalbetrieb der Industrieanlage 100, in Abhängigkeit von einer Rückmeldung von einem berechtigten Benutzer.

Dies kann ein Entfernen oder Hinzufügen von historischen Sensorwerten umfassen, die dem Normalbetrieb der Industrieanlage 100 zugeordnet werden und die somit als Trainingsdaten fungieren können. Auf diese Weise können verbesserte Trainingsdaten bereitgestellt werden.

Wie oben bereits erwähnt, kann beim Vergleichen von Sensorwerten SW mit erwarteten Sensorwerten SWE mindestens ein, bspw. erstes, Verfahren zum maschinellen Lernen und/oder eine künstliche Intelligenz und/oder ein künstliches neuronales Netz verwendet wird.

Außerdem kann beim Gruppieren von Sensorwerten SW, beim Verarbeiten von Sensorwerten SW und/oder beim Bereitstellen von dem mindestens einen Gesundheitsindexwert HI der Industrieanlage 100 ein, bspw. zweites, Verfahren zum maschinellen Lernen, und/oder eine künstliche Intelligenz und/oder ein künstliches neuronales Netz verwendet werden.

Beim Gruppieren von Sensorwerten SW kann vorzugsweise ein automatisches, datengesteuertes Verfahren zur Festlegung des Normalbetriebs der Industrieanlage 100 verwendet werden. Dabei können Sensorwerte SW herausgefiltert werden, die nicht zu den häufigsten Sensorwert-Clustern gehören. Zudem können die Sensorwerte SW herausgefiltert werden, die an Zeiträumen erstellt wurden, in denen ein anormales Ereignis auftrat, wie z. B. die Zeiten, in denen die Industrieanlage 100 gewartet wurde. Die Sensorwerte SW, die zum Normalbetrieb der Industrieanlage 100 gehören, können vorteilhafterweise als historische Sensorwerte definiert und zum Anlernen von mindestens einem Verfahren zum maschinellen Lernen verwendet werden, welches bei dem vorliegenden Verfahren verwendet wird.

Ferner kann das Verfahren vorsehen:
- Speichern von historischen Sensorwerten für einen Normalbetrieb der Industrieanlage 100, von berichtigten Sensorwerten für einen Normalbetrieb der Industrieanlage 100, von dem mindestens einen Gesundheitsindexwert HI der Industrieanlage 100 und insbesondere von mindestens einem Kritikalitätsindex CI von dem mindestens einen Gesundheitsindexwert HI zumindest zum Teil auf einer externen Backendeinheit.

Die Figuren 1 bis 3 deuten außerdem ein Steuersystem 200 im Sinne der Erfindung an, welches mit einer, insbesondere cloudbasierten, Steuereinheit 201 ausgeführt werden kann. Die Steuereinheit 201 kann eine Speichereinheit und eine Recheneinheit aufweisen, wobei in der Speichereinheit ein Code hiterlegt ist, und wobei beim Ausführen des Codes durch die Recheneinheit ein Verfahren durchgeführt wird, welches wie oben beschrieben ablaufen kann.

Auf der Benutzerseite kann bei dem Steuersystem 200 eine Schnittstelle für einen Benutzer, insbesondere in Form einer Ein- und/oder Ausgabeoberfläche 202, vorgesehen sein, die speziell dazu ausgeführt ist, um mindestens einen Schritt und/oder mindestens ein Ergebnis des Verfahrens auszugeben, und/oder um mindestens eine Interaktionsmöglichkeit für den Benutzer zum Beeinflussen des Verfahrens bereitzustellen, insbesondere um Sensorwerte SW auszuwerten, die als mögliche Fehlerquellen erkannt wurden. Mithilfe der Ein- und/oder Ausgabeoberfläche 202 kann somit Feedbackmöglichkeit zum Anpassen von erwarteten Sensorwerten SW und/oder zum Anpassen von historischen Sensorwerten für einen Normalbetrieb der Industrieanlage 100 ermöglicht werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Industrieanlage

- K: Komponente
- comp1: Komponente
- comp2: Komponente

- SK: Subkomponente
- subcomp1: Subkomponente
- subcomp2: Subkomponente

- Si: Sensoren
- S1: Sensor
- S2: Sensor

- SW: Sensorwerte
- SWE: erwartete Sensorwerte
- dS: Abweichung
- dt: Überwachungsperiode

- Sf: Sensorauswahl

- Hl: Gesundheitsindexwert

- Hlall: Gesundheitsindexwert für die Industrieanlage als Ganzes
- Hlef: Effizienzindexwert für eine bestimmte Auswahl an Sensoren

- Hlcomp: Gesundheitsindexwert für eine Komponente
- Hlsubcomp: Gesundheitsindexwert für eine Subkomponente

- CI: Kritikalitätsindex
- CIP: Leistungsindex
- CIS: Sicherheitsindex
- 200: Steuersystem
- 201: Steuereinheit
- 202: Ein- und/oder Ausgabeoberfläche

## Patentansprüche

1. Kontroll- und Überwachungsverfahren für eine Industrieanlage (100), umfassend insbesondere mindestens eine Anlage zur Energieerzeugung, Energieumwandlung und/oder Energieübertragung, eine Medienversorgungsanlage, eine Produktionsanlage, eine Verarbeitungsanlage und/oder eine Betriebsanlage, um vorzugsweise eine Instandhaltung der Industrieanlage (100) vorausschauend durchführen zu können, und um bevorzugt Störungen und/oder Ausfälle im Betrieb der Industrieanlage (100) zu vermeiden,
aufweisend:
- Bereitstellen von Sensorwerten (SW) von einer Vielzahl an Sensoren (Si), die insbesondere der Industrieanlage (100) als Ganzes, mindestens einer Komponente (K) der Industrieanlage (100) und/oder mindestens einer Subkomponente (SK) der Industrieanlage (100) zugehören,
- Gruppieren von Sensorwerten (SW) in Abhängigkeit von mindestens einem Faktor im Betrieb der Industrieanlage (100),
- Verarbeiten von Sensorwerten (SW) in Abhängigkeit von dem Gruppieren,
- Bereitstellen von mindestens einem, insbesondere normierten, Gesundheitsindexwert (HI) für die Industrieanlage (100) in Abhängigkeit von dem Verarbeiten.

2. Verfahren nach Anspruch 1,
**dadurch gekennzeichnet,**
**dass** das Verfahren mindestens einen weiteren Schritt umfasst:
- hierarchisches Auswerten von Sensorwerten (SW) in Abhängigkeit von dem mindestens einen Gesundheitsindexwert (HI) der Industrieanlage (100),
wobei insbesondere das hierarchische Auswerten von Sensorwerten (SW) angefangen von der Industrieanlage (100) als Ganzes, über mindestens eine Komponente (K) der Industrieanlage (100) und/oder über mindestens einer Subkomponente (SK) der Industrieanlage (100) zu der Vielzahl an Sensoren (Si) durchgeführt wird.

3. Verfahren nach Anspruch 2,
**dadurch gekennzeichnet,**
**dass** das Verfahren mindestens einen weiteren Schritt umfasst:
- Fehleranalyse im Betrieb der Industrieanlage (100) in Abhängigkeit von dem hierarchischen Auswerten,
- Ausgeben einer Rückmeldung in Abhängigkeit von der Fehleranalyse, vorzugsweise in Form einer Auswahl an möglichen Sensorwerten (SW), korrespondierenden Subkomponenten (SK), Komponenten (K) und/oder der Industrieanlage (100) als Ganzes, die mithilfe des Verfahrens als Fehlehrquellen im Betrieb der Industrieanlage (100) bewertet wurden,
- Ausgeben einer, visuellen und/oder akustischen, Empfehlung für eine vorausschauende Instandhaltung der Industrieanlage (100) in Abhängigkeit von der Fehleranalyse,
- Ausgeben einer Warnung und/oder eines Alarms in Abhängigkeit von der Fehleranalyse, wenn der Betrieb der Industrieanlage (100) fehlerhaft und/oder kritisch bewertet wurde,
- Veranlassen einer vorausschauenden Instandhaltung der Industrieanlage (100) in Abhängigkeit von der Fehleranalyse.

4. Verfahren nach einem der vorhergehenden Ansprüche,
**dadurch gekennzeichnet,**
**dass** beim Bereitstellen von Sensorwerten (SW) die Sensorwerte mit erwarteten Sensorwerten (SWE) verglichen werden,
wobei insbesondere die erwarteten Sensorwerte (SWE) in Abhängigkeit von dem Gruppieren, bspw. in Abhängigkeit von anderen Sensorwerten (SW) für eine korrespondierende Subkomponente (SK) der Industrieanlage (100), bestimmt werden, wobei vorzugsweise die erwarteten Sensorwerte (SWE) durch mindestens ein, bspw. erstes, Verfahren zum maschinellen Lernen bestimmt werden,
und/oder dass beim Verarbeiten von Sensorwerten (SW) die Sensorwerte als mögliche Fehlerquellen beurteilt werden, die von den erwarteten Sensorwerten (SWE) um mehr als eine bestimmte Anzahl an, bspw. um mehr als fünf, Standardabweichungen entfernt sind.

5. Verfahren nach einem der vorhergehenden Ansprüche,
**dadurch gekennzeichnet,**
**dass** beim Gruppieren von Sensorwerten (SW) mindestens ein Faktor berücksichtigt wird:
- funktionale Zugehörigkeit von Sensoren (Si),
- Subkomponentenzugehörigkeit,
- Komponentenzugehörigkeit,
- örtliche Zugehörigkeit,
- zeitliche Abhängigkeit,
- physikalische und/oder chemische Zugehörigkeit,
- prozesstechnische Zugehörigkeit,
- Betriebsmodizugehörigkeit,
- Datenkorrelation usw.,
wobei insbesondere das Gruppieren von Sensorwerten (SW) automatisiert erfolgt, vorzugsweise durch ein, bspw. zweites, Verfahren zum maschinellen Lernen und/oder dass beim Verarbeiten von Sensorwerten (SW) eine Kritikalität von Sensorwerten (SW) im Hinblick auf die Effizienz, Leistung und/oder Sicherheit und/oder Verfügbarkeit der Industrieanlage (100) berücksichtigt wird.

6. Verfahren nach einem der vorhergehenden Ansprüche,
**dadurch gekennzeichnet,**
**dass** der mindestens eine Gesundheitsindexwert (HI) einen Gesundheitsindexwert (Hlall) für alle Sensoren (Si) der Industrieanlage (100) umfasst,
und/oder dass der mindestens eine Gesundheitsindexwert (HI) einen Effizienzindexwert (Hlef) für eine bestimmte Auswahl an Sensoren (Si) der Industrieanlage (100) umfasst und/oder
**dass** das Verfahren mindestens einen weiteren Schritt umfasst:
- Zuordnen von mindestens einem Kritikalitätsindex (CI) zu dem mindestens einen Gesundheitsindexwert (HI) für die Industrieanlage (100).

7. Verfahren nach dem vorhergehenden Anspruch,
**dadurch gekennzeichnet,**
**dass** der mindestens eine Kritikalitätsindex (CI) mindestens einen Leistungsindex (CIP) umfasst, der eine Kritikalität des mindestens einen Gesundheitsindexwerts (HI) für die Leistung der Industrieanlage (100) bestimmt,
und/oder dass der mindestens eine Kritikalitätsindex (CI2) mindestens einen Sicherheitsindex (CIS) umfasst, der eine Kritikalität des mindestens einen Gesundheitsindexwerts (HI) für die Sicherheit des Betriebs der Industrieanlage (100) bestimmt.

8. Verfahren nach einem der vorhergehenden Ansprüche,
**dadurch gekennzeichnet,**
**dass** das Verfahren mindestens einen weiteren Schritt umfasst:
- Bereitstellen von mindestens einem, insbesondere normierten, Gesundheitsindexwert (Hlcomp) für mindestens eine Komponente (K) der Industrieanlage (100), insbesondere in Abhängigkeit von dem mindestens einen Gesundheitsindexwert (HI) der Industrieanlage (100) und/oder
- Bereitstellen von mindestens einem, insbesondere normierten, Gesundheitsindexwert (Hlsubcomp) für mindestens eine Subkomponente (SK) von mindestens einer Komponente (K) der Industrieanlage (100), insbesondere in Abhängigkeit von dem mindestens einen Gesundheitsindexwert (HI) der Industrieanlage (100) und vorzugsweise in Abhängigkeit von mindestens einem Gesundheitsindexwert (Hlcomp) für mindestens eine Komponente (K) der Industrieanlage (100).

9. Verfahren nach einem der vorhergehenden Ansprüche,
**dadurch gekennzeichnet,**
**dass** das Verfahren mindestens einen weiteren Schritt umfasst:
- Bereitstellen von einer zugehörigen Sensorauswahl (Sf) in Abhängigkeit von dem Gruppieren, bspw. für mindestens eine Subkomponente (SK) von mindestens einer Komponente (K) der Industrieanlage (100),
insbesondere in Abhängigkeit von dem mindestens einen Gesundheitsindexwert (HI) der Industrieanlage (100)
und vorzugsweise insbesondere in Abhängigkeit von mindestens einem Gesundheitsindexwert (Hlcomp) für mindestens eine Komponente (K) der Industrieanlage (100)
und bevorzugt in Abhängigkeit von mindestens einem Gesundheitsindexwert (Hlsubcomp) für mindestens eine Subkomponente (SK) einer Komponente (K) der Industrieanlage (100).

10. Verfahren nach einem der vorhergehenden Ansprüche,
**dadurch gekennzeichnet,**
**dass** beim Bereitstellen von Sensorwerten (SW) mindestens eine Überwachungsperiode (dt), von bspw. 1 min, vorzugsweise für eine periodische Durchführung des Verfahrens, bestimmt wird,
und/oder dass beim Bereitstellen von Sensorwerten (SW) eine individuelle Überwachungsperiode für mindestens einen Sensor (Si) bestimmt wird und/oder dass das Verfahren nach einem der vorhergehenden Ansprüche periodisch, regelmäßig und/oder ereignisgesteuert durchgeführt wird.

11. Verfahren nach einem der vorhergehenden Ansprüche,
**dadurch gekennzeichnet,**
**dass** das Verfahren mindestens einen weiteren Schritt umfasst:
- Zuordnen von Schwellenwerten zur Definition von Warnungen und/oder Fehlerstufen für den mindestens einen Gesundheitsindexwert (HI) der Industrieanlage (100)
und insbesondere für mindestens einen Gesundheitsindexwert (Hlcomp) für mindestens eine Komponente (K) der Industrieanlage (100) und vorzugsweise für mindestens einen Gesundheitsindexwert (Hlsubcomp) für mindestens eine Subkomponente (SK) einer Komponente (K) der Industrieanlage (100) und/oder
**dass** das Verfahren mindestens einen weiteren Schritt umfasst:
- Bereitstellen einer Auswahl an Sensorwerten (SW), korrespondierenden Subkomponenten (SK), Komponenten (K) und/oder der Industrieanlage (100) als Ganzes, die mithilfe des Verfahrens als mögliche Fehlehrquellen im Betrieb der Industrieanlage (100) bewertet wurden,
insbesondere an einen berechtigten Benutzer,
- Bereitstellen einer Bestätigungsmöglichkeit für Sensorwerte (SW), die mithilfe des Verfahrens als mögliche Fehlehrquellen im Betrieb der Industrieanlage (100) bewertet wurden, als zulässige Sensorwerte,
insbesondere an einen berechtigten Benutzer,
- Bereitstellen einer Gruppierungsmöglichkeit, für Sensorwerte (SW), die mithilfe des Verfahrens als mögliche Fehlehrquellen im Betrieb der Industrieanlage (100) bewertet wurden, insbesondere im Hinblick auf den bestimmten Faktor im Betrieb der Industrieanlage (100),
insbesondere an einen berechtigten Benutzer, und/oder
- Bereitstellen einer Bewertungsmöglichkeit für Sensorwerte (SW), die mithilfe des Verfahrens als mögliche Fehlehrquellen im Betrieb der Industrieanlage (100) bewertet wurden, insbesondere zum Bewerten einer Kritikalität von den Sensorwerten (SW) im Hinblick auf die Effizienz, Leistung und/oder Sicherheit und/oder Verfügbarkeit der Industrieanlage (100),
insbesondere an einen berechtigten Benutzer
und/oder
**dass** das Verfahren mindestens einen weiteren Schritt umfasst:
- Anpassen einer Strategie, insbesondere Anpassen einer berichtigten Menge an historischen Sensorwerten für einen Normalbetrieb der Industrieanlage (100), in Abhängigkeit von einer Rückmeldung von einem berechtigten Benutzer.

12. Verfahren nach einem der vorhergehenden Ansprüche,
**dadurch gekennzeichnet,**
**dass** beim Vergleichen von Sensorwerten (SW) mit erwarteten Sensorwerten (SWE) mindestens ein, bspw. erstes, Verfahren zum maschinellen Lernen verwendet wird, und/oder dass beim Gruppieren von Sensorwerten (SW), beim Verarbeiten von Sensorwerten (SW) und/oder beim Bereitstellen von dem mindestens einen Gesundheitsindexwert (HI) der Industrieanlage (100) ein, bspw. zweites, Verfahren zum maschinellen Lernen, verwendet wird,
und/oder dass beim Gruppieren von Sensorwerten (SW), beim Verarbeiten von Sensorwerten (SW) und/oder beim Bereitstellen von dem mindestens einen Gesundheitsindexwert (HI) der Industrieanlage (100) ein automatisches, datengesteuertes Verfahren zur Festlegung des Normalbetriebs der Industrieanlage (100) verwendet wird,
wobei insbesondere Sensorwerte herausgefiltert werden, die nicht zu den häufigsten Sensorwert-Clustern gehören,
wobei vorzugsweise die Sensorwerte herausgefiltert werden, die durch Filtern von Zeiträumen erstellt werden, in denen ein anormales Ereignis auftrat, wie z. B. die Zeiten, in denen die Industrieanlage (100) gewartet wurde,
wobei bevorzugt die Sensorwerte, die zum Normalbetrieb der Industrieanlage (100) gehören, als historische Sensorwerte definiert und zum Anlernen von mindestens einem Verfahren zum maschinellen Lernen verwendet werden.

13. Verfahren nach dem vorhergehenden Anspruch,
**dadurch gekennzeichnet,**
**dass** das Verfahren mindestens einen weiteren Schritt umfasst:
- Speichern von historischen Sensorwerten für einen Normalbetrieb der Industrieanlage (100), von berichtigten Sensorwerten (SW) für einen Normalbetrieb der Industrieanlage (100), von dem mindestens einen Gesundheitsindexwert (HI) der Industrieanlage (100) und insbesondere von mindestens einem Kritikalitätsindex (CI) von dem mindestens einen Gesundheitsindexwert (Hl) zumindest zum Teil auf einer externen Backendeinheit.

14. Computerprogrammprodukt, umfassend Befehle, die bei der Ausführung des Computerprogramms durch einen Computer diesen veranlassen, ein Verfahren nach einem der vorhergehenden Ansprüche durchzuführen.

15. Steuersystem (200) mit einer Steuereinheit (201),
aufweisend eine Speichereinheit und eine Recheneinheit,
wobei in der Speichereinheit ein Code hiterlegt ist,
und wobei beim Ausführen des Codes durch die Recheneinheit ein Verfahren nach einem der vorhergehenden Ansprüche durchgeführt wird, wobei vorzugsweise vorgesehen ist,
dass eine Schnittstelle für einen Benutzer, insbesondere in Form einer Ein- und/oder Ausgabeoberfläche (202), vorgesehen ist, die speziell dazu ausgeführt ist,
um mindestens einen Schritt und/oder mindestens ein Ergebnis des Verfahrens nach einem der vorhergehenden Ansprüche auszugeben,
und/oder um mindestens eine Interaktionsmöglichkeit für den Benutzer zum Beeinflussen des Verfahrens nach einem der vorhergehenden Ansprüche, insbesondere nach einem der Ansprüche 10 bis 11, bereitzustellen.
